# EUROPEAN PATENT SPECIFICATION

(11) **EP 2 324 401 B1**
(45) Date of publication and mention of the grant of the patent: **21.12.2016**
(21) Application number: 08787306.3
(22) Date of filing: 19.08.2008
(51) Int. Cl.: G05D 11/00, G05D 11/03, B01F 15/04

(54) **CONTAINER SYSTEM**
CONTAINERSYSTEM
SYSTÈME DE CONTENANT

(43) Date of publication of application: 25.05.2011
(73) Proprietor: Ecolab INC., St. Paul, MN 55102 (US)
(72) Inventor: RINGS, Friedel, 42327 Wuppertal (DE); KULLWITZ, Dirk, 47918 Tönisvorst (DE); SCHMIDT-DOBROWOLNY, Patrick, 41812 Erkelenz (DE)
(74) Representative: Godemeyer Blum Lenze Patentanwälte Partnerschaft mbB - werkpatent
(86) International application number: PCT/EP2008/060824
(87) International publication number: WO 2010/020275

(56) References cited:
- GB-A- 1 191 514
- JP-A- 56 072 711
- JP-A- 60 003 721
- US-A- 2 883 996
- US-A1- 2005 059 746
- US-A1- 2005 242 115

## Description

The present application relates to the field of container systems. In particular this application relates to container systems for discharging flowable products which mix with each other during the discharging process.

Container systems are generally known in the art. Such container systems may be used for many purposes, for example to separate two or more reactive components of a composition in separate containers of the container system, e.g. alkaline cleaners and active oxygen compounds, or to deliver an aesthetic effect of the discharged product. Container systems have been described in many forms and using a number of different dispensing mechanisms.

US 2,883,996 relates to a fluid proportioning means and more particularly to a proportioning means that has a plurality of inlets and a single outlet and that is adapted to maintain a constant proportion between component blending fluids, notwithstanding variation in the relative pressure differentials between the inlets and the outlets of said valve means.

The object of the present invention was to provide a container system and a method for efficient mixing and discharging two or more liquids with a high accuracy of the mixing ratio and high flow rate.

Further, the object was to provide multiple-compartment containers, wherein all compartments empty within the same time.

Therefore, the present invention provides a container system for discharging flowable products comprising at least a first container containing a first flowable product, a second container containing a second flowable product and a mixing/discharging volume where the first and second flowable products mix during the discharging process, wherein the first container is having a first outlet linked to the mixing/discharging volume; wherein the second container is having a second outlet linked to the mixing/discharging volume; wherein the mixing/discharging volume is having a third outlet for discharging a mixed flowable product; wherein discharging the first flowable product from the first container is controlled by a first valve and discharging the second flowable product from the second container is controlled by a second valve. According to the present invention the first valve and the second valve are flat valves and wherein the first valve and the second valve operate simultaneously. According to the present invention one of the valves (the first valve or the second valve) closes first.

The container system of the present invention is used for rapid mixing and discharging of two or more liquids which are stored separately, wherein at least the discharging step preferably does not require any electric power supply. Further preferred the re-filling of the container system also does not need any electric power supply.

This arrangement has the advantage that the flat valves are easy and cheap to produce on a large scale. By operating the first valve and the second valve simultaneously it is guaranteed that a desired ratio of the first flowable product to the second flowable product is dispensed. Flat valves additionally have the advantage that the valve is fully open after a short movement of the sealing cover, which allows a fast mixing and discharging of the contained flowable products, while keeping the ratio of first flowable product to second flowable product constant during the discharging process.

In a preferred embodiment of the invention the first outlet and the second outlet are located separately. This avoids a cross-contamination of the first flowable product contained in the first container with the second flowable product contained in the second container during or after the mixing/discharging process. In case the first outlet and the second outlet are not located separately it might be possible that a cross-contamination occurs during or after the mixing/discharging process.

In a particular preferred embodiment the first outlet is opened and closed by the first valve and the second outlet is opened and closed by the second valve. This additionally prevents a cross-contamination of the first flowable product contained in the first container with the second flowable product contained in the second container during or after the mixing/discharging process.

As mentioned above, according to the present invention one of the valves (the first valve or the second valve) closes first. Preferably, that valve, which is closing first, also opens after the other valve opens.

In case the first valve closes before the second valve closes, and that the first valve opens after the second valve opens, the second flowable product discharged from the second container is used as rinsing liquid. With other words, in this embodiment the second valve opens before the first valve and closes after the first valve closes.

In case the second valve closes before the first valve closes, and that the second valve opens after the first valve opens, the first flowable product discharged from the first container is used as rinsing liquid. With other words, in this embodiment the first valve opens before the second valve and closes after the second valve closes.

Although, in these preferred embodiments one of the valves opens last and closes first compared to the other valve with a short time delay, it should be appreciated that the first valve and second valve are still operated simultaneously.

The advantage of such an arrangement is that the flowable product from that container to which the longer opening and therefore discharging time is attributed serves as rinsing liquid. In that way clogging, saponification or resinification of the mixing/discharging volume and/or microbiological growth in the mixing/discharging volume is prevented.

In case the first valve closes before the second valve closes, and that the first valve opens after the second valve opens, such an arrangement has the advantage that after the first valve is closed no more liquid from the first container will be discharged, while liquid from the second container is still discharged. By only discharging liquid from the second container it is possible to rinse the mixing/discharging volume with the second liquid. Hence, a clogging, saponification or resinification of the mixing/discharging volume and/or microbiological growth in the mixing/discharging volume is prevented. Further, the mixing/discharging volume is also rinsed before the mixed flowable product is discharged, thus preventing a clogging, saponification or resinification of the mixing/discharging volume and/or microbiological growth in the mixing/discharging volume. Furthermore, it is guaranteed that the discharged product is not contaminated with an old mixed product that has been discharged before, as the mixing/discharging volume is rinsed before mixing/discharging a flowable product.

It is obvious to the person skilled in the art that the second container contains a liquid that is usable for rinsing, e.g. water, while the first container may contain any flowable product, even aggressive chemicals.

In a further preferred embodiment the first valve contains a retard spring which causes the first valve to close before the second valve. In case the same force is applied to the first and second valve the first valve closes before the second valve if the retard spring applies a force into the closing direction of the first valve. The same retard spring additionally causes the first valve to open after the second valve opens. It is known to a person skilled in the art how to position a retard spring so that it applies a force into the closing direction of a valve.

Alternatively, the second valve contains a retard spring which causes the second valve to close before the first valve. In case the same force is applied to the first and second valve the second valve closes before the first valve if the retard spring applies a force into the closing direction of the second valve. The same retard spring additionally causes the second valve to open after the first valve opens. It is known to a person skilled in the art how to position a retard spring so that it applies a force into the closing direction of a valve.

In case the first container and the second container have the same height and the ratio between the area of the first outlet of the first container and the area of the second outlet of the second container is equal to the ratio between the volume of the first container and the volume of the second container both containers will empty at the same time, resulting in a constant ratio of the first flowable product to the second flowable product in the discharged product. The ratio between the first flowable product and the second flowable product in the discharged flowable product is proportional to the ratio of the volumes of the first and second container.

In a further preferred embodiment of the invention the container system does not comprise a power supply or energy source.

In another embodiment of the invention the container system can mix and discharge more than 100l of flowable products per minute, preferably more than 200l of flowable products per minute and further preferably more than 300l of flowable products per minute.

In case the viscosity of the first flowable product differs from the viscosity of the second flowable product the ratio between the area of the first outlet of the first container and the area of the second outlet of the second container is adjusted so that both containers will empty at the same time. If the viscosity of the flowable product contained in the first container is higher than the viscosity of flowable product contained in the second container then the size of the first outlet should be increased as in the case when both flowable products have the same viscosity.

In another preferred embodiment the cross-section of the first and second container is constant over their height.

During the employment of a container system according to this invention the force applied to first valve and second valve should be equal, so that both valves are operated simultaneously, to achieve that the first and second container will empty at the same time. For this reason it is advantageously that the first valve and the second valve are arranged inline, so that a mechanical device (e.g. an actuation rod) can be used to operate first and second valve simultaneously. In the simplest case one or more metal rods can be used. The term "simultaneously" does not mean that the first and second outlet is opened simultaneously. As mentioned above, in the present invention a device is applied in that way that the first valve closes before the second valve closes. This device may involve that the first valve preferably comprises a retard spring.

In a further embodiment of the invention the second valve opens and closes the third outlet of the mixing/discharging volume. In this case the mixing/discharging volume is filled with the second flowable product when both valves are closed because the second container is not closed by a valve. Thus preventing a clogging, saponification or resinification of the mixing/discharging volume and/or microbiological growth in the mixing/discharging volume

The container systems disclosed in the state of the art are all fixed in size. According to the invention this disadvantage can be overcome if the first container and/or second container consist of more than one tank which preferably are connected in liquid communication. In this case a tank can be connected to or disconnected from the liquid communication of first or second container, thus forming a part of first or second container or not. Hence, the volume of the first and/or second container can be adjusted by adding or removing tanks from first and/or second container. The tanks of the first container can be connected to each other by a first connection pipe, so that the tanks are connected in liquid connection. Correspondingly the tanks of the second container can be connected to each other by a second connection pipe. In such a case the first valve preferably opens and closes the first pipe, while the second valve opens and closes the second pipe. It is obvious to a person skilled in the art, that the first valve is positioned in such a way, that no flowable product from any tank of the first container can flow into the mixing/discharging volume in case the first valve is closed. The same is true for the second valve and the second container which consists of more than one tank.

In case the volume of the first and/or second container can be modified by adding or removing tanks from first and/or second container it might be necessary to adjust the area of the first and/or second outlet in order to achieve that the first and second container will empty at the same time. To adjust the area of first and/or second outlet, the first and/or second valve can comprise an adjustment cone. This adjustment cone is positioned in such a way that it partly closes the first and/or second outlet in relation to the movement of the valve head of the corresponding valve. Preferably the gradient of the adjustment cone decreases with respect to movement of the valve head of the first and/or second valve into the open position. Thus the area of the first and/or second outlet increases with a movement of the valve head of the first and/or second valve into the open position. Hence, the flow rate of the first and/or second flowable product from the first and/or second container to the mixing/discharging volume can be adjusted by the movement of the valve head of the corresponding valve.

In another preferred embodiment of the invention the first container is located inside the second container and the second outlet of the second container provides a fluid communication between the second container and the mixing/discharging volume. This container-inside-container design has the advantage that the outer shape and dimension of the whole container system is only defined by the shape of the second container. By modifying the shape of the second container of the container system the storage and transportability of the whole container system can be increased.

In a particularly preferred embodiment the first flowable product is a chemical substance, preferably a chemical substance which has to be stored separately from other substances in order to avoid a reaction and thereby decomposition, or in order to avoid precipitation and thus inactivation during storage, preferably one of the flowable product is comprising a peroxy substance or hypochlorite substance which has to be stored separately from for example alkaline substances. The second container of the container system is preferably filled with water or another chemical substance. In another case the formation of lime soap can be prevented which occurs when surfactants are brought in contact with water of high hardness. Therefore, using the container system in one container a liquid detergent may be stored while in the other container water of a given hardness is stored and are brought together for preparing a ready-to-use solution just shortly before actual use.

Preferably the container system can contain a total of 50l to 1000l, more preferably 100l, 200l, 3001 or 500l of flowable product and the ratio of the first flowable to the second flowable product ranges from 1:1000 to 1:10, preferably 1:500 to 1:10, more preferably from 1:200 to 1:50, further preferred from 1:200 to 1:100. In order to avoid the necessity of a power supply or external energy source the first and second flowable products are discharged by gravity.

Although the described preferred embodiments only contain two containers it is obvious to a person skilled in the art, that the invention can be used for container systems containing any number of containers more than two.

The above described container system can be used to separately store at least two different, preferably reactive flowable products. Each reactive flowable product is stored in a separate container. These reactive flowable products can be mixed in a well defined ratio. Preferably the discharging of the flowable products is performed at a flow rate of at least 100 I/min, more preferably at a flow rate of at least 200 I/min and even more preferably at a flow rate of at least 300 I/min. This is especially useful for floor cleaners, ware washing detergents or microbiological cleaners. The container system described above can further be used as a refill container for cleaning machines, preferably automatic scrubbers.

### Modes for carrying out the invention

As mentioned above the present invention refers to a container system comprising at least a first container containing a first flowable product, a second container containing a second flowable product and a mixing/discharging volume where the first and second flowable products mix during the discharging process, wherein the first container is having a first outlet linked to the mixing/discharging volume; wherein the second container is having a second outlet linked to the mixing/discharging volume; wherein the mixing/discharging volume is having a third outlet for discharging a mixed flowable product; and wherein discharging the first flowable product from the first container is controlled by a first valve and discharging the second flowable product from the second container is controlled by a second valve. According to the present invention the first valve and the second valve are flat valves and the first valve and the second valve operate simultaneously. According to the present invention one of the valves (the first valve or the second valve) closes first.

The advantage of the present invention is that the flat valves are easy and cheap to produce on a large scale. A particular advantage is that the flowable products stored in the containers can be mixed and discharged very rapidly.

By operating the first valve and the second valve simultaneously it is guaranteed that a desired ratio of the first flowable product to the second flowable product is dispensed. Flat valves additionally have the advantage that the valve is fully open after a short movement of the sealing cover, which allows a fast mixing and discharging of the contained flowable products, while keeping the ratio of first flowable product to second flowable product constant during the discharging process.

A cross contamination between first flowable product and second flowable product during the mixing and discharging process is prevented by separate arrangement of the first and second outlet. Furthermore, the first and second outlet are opened and closed by first and second valve respectively. In another embodiment it is also possible that the second valve opens and closes the third outlet of the mixing/discharging volume instead of the second outlet of the second container whithout changing the result.

Preferably, the first valve closes before the second valve closes. Additionally, the second valve opens before the first valve opens. The advantage of this embodiment is that the flowable product stored in the second container serves as rinsing liquid, and that the flowable product stored in the containers are not contaminated with the respective other flowable product when the valves are open and the liquids are mixed and discharged. Further preferred, the first valve and the second valve are arranged in line. Still further preferred, the first valve and the second valve are operated simultaneously, preferably by mechanical devices, further preferred by a single rod. Even further preferred, the first valve and/or second valve comprises an adjustment cone or a retard spring. It is particularly preferred that the first container is located inside the second container and that the second outlet of the second container provides a fluid communication between the second container and the mixing/discharging and is opened and closed by the second valve.

The advantage of the present invention is that after the first valve is closed no more liquid from the first container will be discharged, while liquid from the second container is still discharged. By only discharging liquid from the second container it is possible to rinse the mixing/discharging volume with the second liquid. Hence, a clogging, saponification or resinification of the mixing/discharging volume and/or microbiological growth in the mixing/discharging volume is prevented. It is obvious to the person skilled in the art that the second container contains a liquid that is usable for rinsing, e.g. water, while the first container can contain any flowable product, even aggressive chemicals.

Preferably, the first container and the second container have the same height and the ratio between the area of the first outlet of the first container and the area of the second outlet of the second container is equal to the ratio between the volume of the first container and the volume of the second container. In consequence both containers will empty at the same time, which is resulting in a constant ratio of the first flowable product to the second flowable product in the discharged product. The ratio between the first flowable product and the second flowable product in the discharged flowable product is proportional to the ratio of the volumes of the first and second container. Further preferably the cross section of the first and second container is constant over their height.

The ratio between the area of the first outlet and the area of the second outlet is adjusted in case the viscosity of the flowable products stored in the first and second container differs.

Preferably the container system does not comprise a power supply or energy source, instead the flowable products are dispensed by gravity only. In this way preferably more than 100l of flowable product can be mixed and discharged in one minute, more preferably more than 200l of flowable product per minute and further preferably more than 300l of flowable product per minute.

In a preferred embodiment of the invention the first container and/or the second container consist of more than one tank, which preferably are connected in liquid communication, e.g. the tanks of the first container are connected by a first pipe and the tanks of the second container are connected by a second pipe. In this embodiment the first valve opens and closes the first pipe and the second valve opens and closes the second pipe or alternatively the third outlet.

The container system is build to contain a total of 50l to 1000l of flowable product, preferably 100l, 200l, 300l or 500l of flowable product, with a ratio of the first flowable to the second flowable product from 1:1000 to 1:10, preferably from 1:500 to 1:10, more preferably from 1:200 to 1:50, further preferred from 1:200 to 1:100.

The invention will now be described by way of example and with reference to the accompanying diagrams in which:
- Figure 1: is a cross-sectional view of a first embodiment of a container system according to the present invention.
- Figure 2: is a cross-sectional view of a another embodiment of a container system according to the present invention.
- Figure 3: is a cross-sectional view of a another embodiment of a container system according to the present invention.
- Figure 4: is a cross-sectional view of a another embodiment of a container system according to the present invention.
- Figure 5: is a cross-sectional view of a another embodiment of a container system according to the present invention comprising more than one tank of the first container and more than one tank of the second container.
- Figure 6: is a cross-sectional view of another embodiment of a container system according to the present invention, wherein the first container is arranged inside the second container.
- Figure 7: is a detailed view of the first and second valve from figure 6, both in a closed position.
- Figure 8: is a detailed view of the first and second valve from figure 6, where the second valve is in an open position and the first valve is in a closed position.
- Figure 9: is a detailed view of the first and second valve from figure 6, both in an open position.

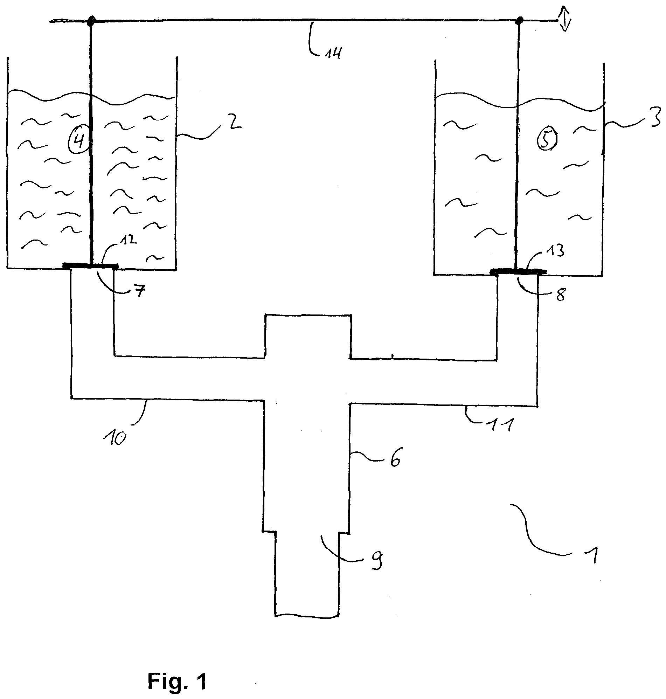

Figure 1 shows a container system 1 for discharging flowable products comprising a first container 2 containing a first flowable product 4, a second container 3 containing a second flowable product 5 and a mixing/discharging volume 6. The first container 2 is having a first outlet 7 linked to the mixing/discharging volume 6 via a first pipe 10 and the second container 3 is a having a second outlet 8 linked to the mixing/discharging volume 6 via a second pipe 11. Hence, during the discharging process the first and second flowable products 4, 5 mix with each other in the mixing/discharging volume 6. The mixed flowable product is discharged from the mixing/discharging volume 6 through a third outlet 9.

The first outlet 7 is opened and closed by a first valve 12, while the second outlet 8 is opened and closed by a second valve 13, where first and second valve 12, 13 are flat valves. The first and second valve 12, 13 are operated simultaneously by a mechanical device 14, e.g. an actuation rod. The mechanical device 14 can be moved upwards and downwards to open and close the first and second valve 12, 13 simultaneously.

By moving the mechanical device 14 upwards the first and second valve 12, 13 open simultaneously. In this case the first and second flowable product 4, 5 will flow from first and second container 2, 3 via first and second pipe 10, 11 into the mixing/discharging volume 6. In the mixing/discharging volume 6 the first and second flowable product 4, 5 mix before they will be discharged from the mixing/discharging volume 6 via third outlet 9. In this embodiment the third outlet 9 is not equipped with any opening or closing devices or valves. The skilled person understands that such devices or valves for opening or closing the third outlet 9 may be applied, if desired, preferably a flat valve may be applied which is operated simultaneously with the flat valves 12 and 13.

By moving the mechanical device or actuation rod 14 downwards the first and second valve 12, 13 close simultaneously. Hence, first and second flowable product 4, 5 cannot flow out of first and second container 2, 3.

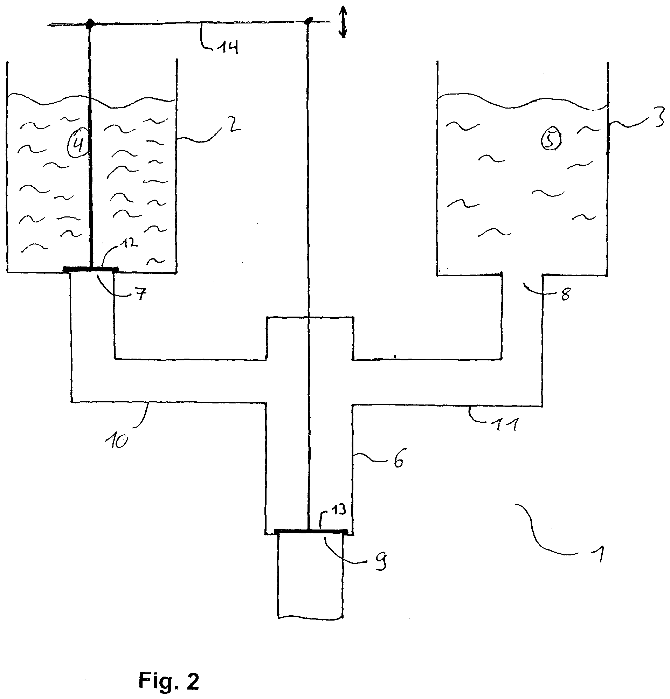

Figure 2 shows a second embodiment of a container system 1 according to the present invention. In this embodiment the second valve 13 opens and closes the third outlet 9. Again, the second valve 13 is operated simultaneously with the first valve 12 by the mechanical device 14. The difference to the first embodiment of figure 1 is that the mixing/discharging volume 6 is filled with the second flowable product 5 in case the first and second valves 12, 13 are closed. In case the first and second valve 12, 13 are opened by mechanical device 14 only the second flowable product 5 which is in the mixing/discharging volume 6 is discharged, until the first flowable product 4 flows into the mixing/discharging volume 6. In this embodiment a mechanical device may be applied in that way that the second valve 13 opens before the first valve 12 opens and that the first valve 12 closes before the second valve 13 closes, for rinsing purposes using the second flowable product 5 stored in the second container 3 as rinsing liquid.

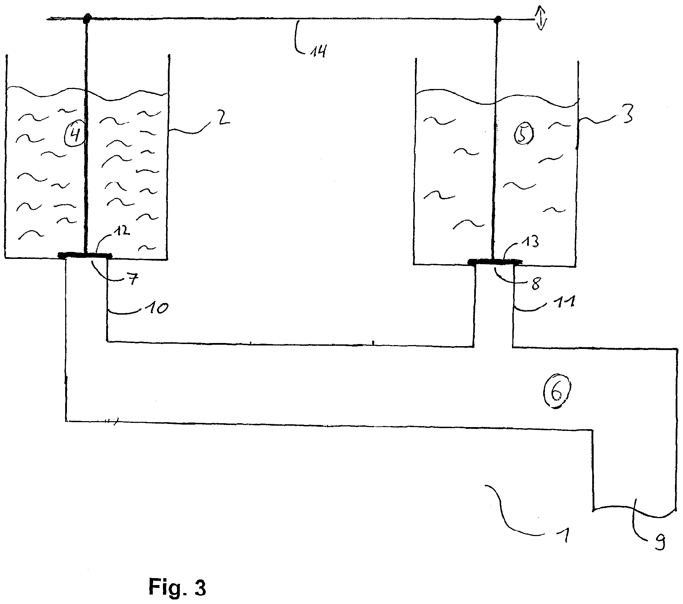

In Figure 3 a third embodiment of the container system 1 according to the present invention is disclosed. In this embodiment the mixing/discharging volume 6 has the shape of a pipe. The first and second flowable products 4, 5 flow from the first and second container 2, 3 via first and second pipe 10, 11 into the mixing/discharging volume 6 which is having the shape of a pipe, in case the first and second valve 12, 13 are open. The third outlet 9 of the mixing/discharging volume 6 which is having the shape of a pipe is located near the second container 3.This results in a situation where in the first time after opening of the first and second valve 12, 13 only the second flowable product 5 is discharged until the first flowable product 4 reaches the area of mixing/discharging volume 6 where the second pipe 11 is connected with the mixing/discharging volume 6. In this embodiment mechanical devices may be applied in that way that the first valve 12 opens before the second valve 13 opens and that the second valve 13 closes before the first valve 12 closes, for rinsing purposes using the first flowable product 4 stored in the first container 2 as rinsing liquid.

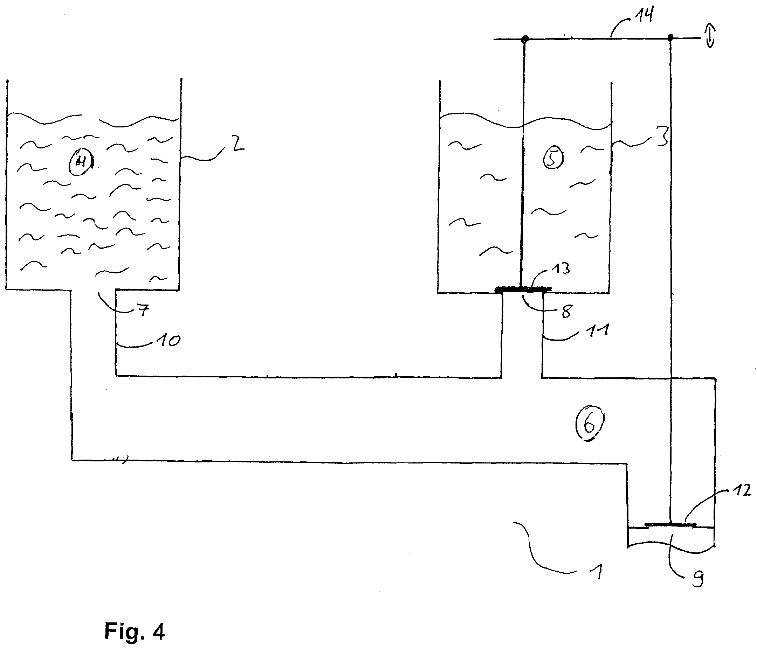

A fourth embodiment of the container system 1 according to the present invention is displayed in figure 4. The difference between the third and fourth embodiment is that the first valve 12 opens and closes the third outlet 9 instead of the first outlet 7. This results in a situation where the mixing/discharging volume 6 is filled with the first flowable product 4 in case the first and second valve 12, 13 are closed. In this embodiment mechanical devices may be applied in that way that the first valve 12 opens before the second valve 13 opens and that the second valve 13 closes before the first valve 12 closes, for rinsing purposes using the first flowable product 4 stored in the first container 2 as rinsing liquid.

The four described embodiments show that the shape of the mixing/discharging volume 6, the location of the third outlet 9 relative to the first and second container 2, 3 and the exact position of first and second valve 12, 13 are not limited to a specific implementation. A person skilled in the art acknowledges that these parameters can be changed in a wide range without leaving the scope of the invention.

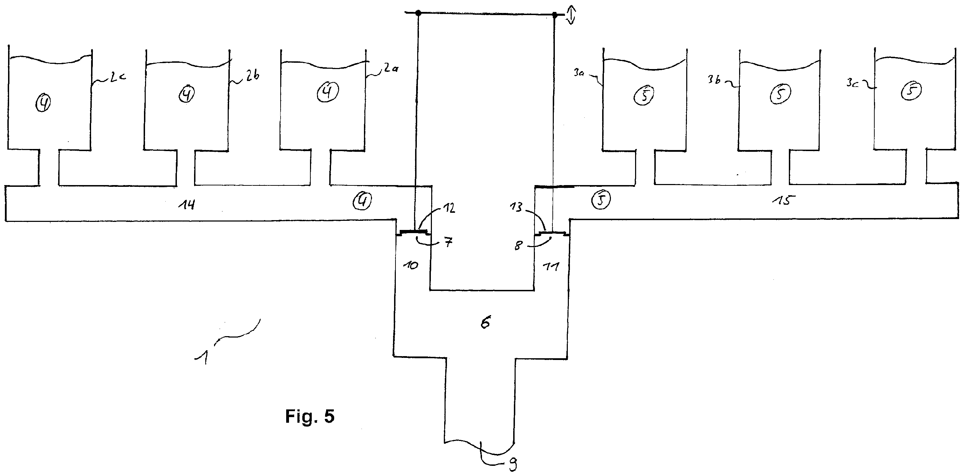

Figure 5 shows a fifth embodiment of the container system 1 according to the present invention. In this embodiment the first and second container 2, 3 each consist of three separate tanks 2a, 2b, 2c, 3a, 3b, 3c which are connected to each other via a first and second connection pipe 14, 15 respectively. The first connection pipe 14 has a first outlet 7, which is linked to the mixing/discharging volume 6 via first pipe 10. Correspondingly, the second connection pipe 15 has a second outlet 8, which is linked to the mixing/discharging volume 6 via second pipe 11. The first and second outlet 7, 8 are opened and closed by first and second valve 12, 13 respectively. The advantage of this embodiment is that the total volume of first and/or second container 2, 3 can be modified by adding or removing tanks to first and/or second connection pipe 14, 15.

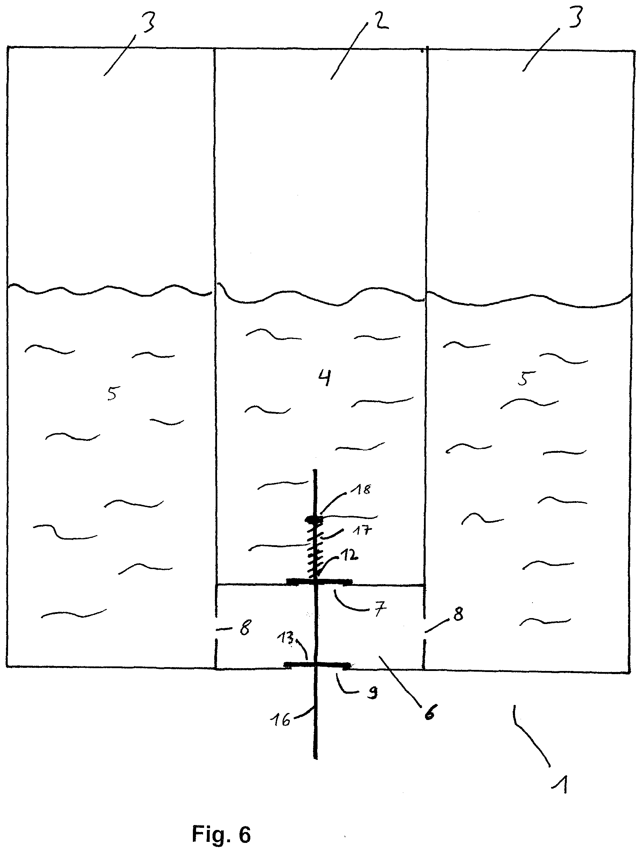

Figure 6 shows a container system 1 for discharging flowable products comprising a first container 2 which is arranged inside the second container 3. The first container 2 is containing a first flowable product 4 and a second container 3 is containing a second flowable product 5. Further, the mixing/discharging volume 6 is indicated. The first container 2 is having a first outlet 7 linked to the mixing/discharging volume 6 and the second container 3 is having a second outlet 8 linked to the mixing/discharging volume 6 by one or more communication opening(s) 8. The mixing/discharging volume 6 is equipped with a third outlet 9. Hence, during the discharging process the first and second flowable products 4, 5 mix with each other in the mixing/discharging volume 6. The mixed flowable product is discharged from the mixing/discharging volume 6 through a third outlet 9.

The first outlet 7 is opened and closed by a first flat valve 12, while the third outlet 9 is opened and closed by a second flat valve 13. The first and second valve 12, 13 are arranged in line and are operated simultaneously by a rod 16. The second valve 13 is directly connected with the rod 16, while the first valve comprises a retard spring 17, which is fixed at one end to the first flat valve 12 and at the other to a connection plate 18 which is connected to the rod 16. In case the first and second valves 12, 13 are operated by moving the rod 16 upwards the retard spring 17 exerts a force on the first valve 12 into the closed position of the first valve 12. As result when moving the rod 16 upwards, the first valve 12 remains in the closed position for some time. With the upwards movement of rod 16 the force in closing direction applied to the first valve 12 by retard spring 17 decreases as the retard spring 17 is stretched, finally resulting in an opening of first valve 12. Hence, the second valve 13 opens before the first valve 12 opens.

If both valves 12, 13 are closed no flowable product is discharged. By moving rod 16 upwards the second valve 13 opens before the first valve 12 opens. In this situation the mixing/discharging volume 6 is rinsed with the second flowable product 5, because the second flowable product 5 can flow from the second container 3 through the second outlet/communication opening(s) 8 to the mixing/discharging volume 6 and through the open third outlet 9. By further moving rod 16 upwards the first valve 12 opens, as described above. Now the first flowable product 4 can flow from the first container 2 through the open first outlet 7 into the mixing/discharging volume 6. In the mixing/discharging volume 6 the first and second flowable product 4, 5 will mix and flow through third outlet 9.

If rod 16 is moved downwards, the first valve 12 closes before the second valve 13 closes because the retard spring 17 applies a force to the first valve 12 into its closing direction, as described above. Because of this additional force, the first valve 12 closes before the second valve 13 closes. Hence, after the first valve 12 is closed, the mixing/discharging volume 6 is again rinsed with the second flowable product 5. Thus preventing a clogging, saponification or resinification of the mixing/discharging volume 6 and/or microbiological growth in the mixing/discharging volume 6.

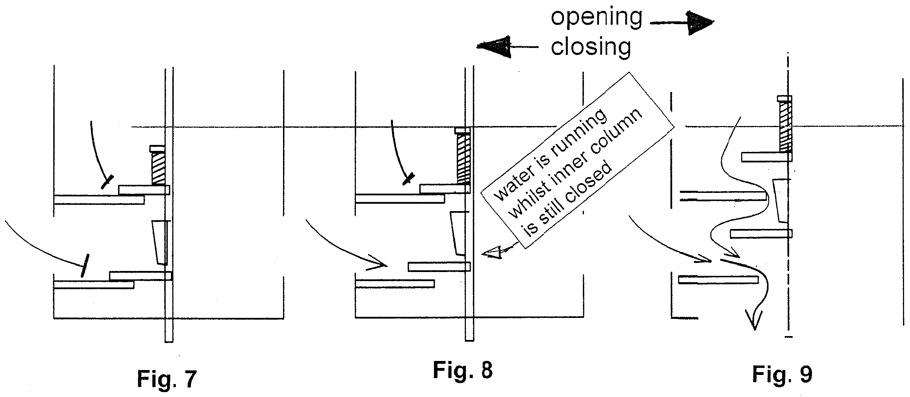

Figures 7 to 9 show the different positions of first and second valve 12, 13 as described above and the corresponding flow of first and second flowable product 4, 5. From figure 7 to figure 8 the stretching of the retard spring 17 can be seen. In figure 9 the elastic force of the retard spring 17 is too weak to keep the first valve 12 in the closed position and hence the first valve 12 is in the open position.

### List of reference numbers

- 1: container system
- 2: first container
- 2a: tank one of first container
- 2b: tank two of first container
- 2c: tank three of first container
- 3: second container
- 3a: tank one of second container
- 3b: tank two of second container
- 3c: tank three of second container
- 4: first flowable product
- 5: second flowable product
- 6: mixing/discharging volume
- 7: first outlet
- 8: second outlet
- 9: third outlet
- 10: first pipe
- 11: second pipe
- 12: first valve
- 13: second valve
- 14: first connection pipe
- 15: second connection pipe
- 16: rod
- 17: retard spring
- 18: connection plate

## Claims

1. A container system (1) for discharging flowable products comprising at least a first container (2) containing a first flowable product (4), a second container (3) containing a second flowable product (5) and a mixing/discharging volume (6) where the first and second flowable products (4, 5) mix during the discharging process,
wherein the first container (2) is having a first outlet (7) linked to the mixing/discharging volume (6);
wherein the second container (3) is having a second outlet (8) linked to the mixing/discharging volume (6);
wherein the mixing/discharging volume (6) is having a third outlet (9) for discharging a mixed flowable product;
wherein discharging the first flowable product (4) from the first container (2) is controlled by a first valve (12) and discharging the second flowable product (5) from the second container (3) is controlled by a second valve (13),
**characterized in that**
the first valve (12) and the second valve (13) are flat valves and wherein the first valve (12) and the second valve (13) operate simultaneously; wherein one of the valves (12 or 13) closes first.

2. The container system (1) according to claim 1, wherein the first outlet (7) and the second outlet (8) are located separately.

3. The container system (1) according to claim 1 or 2, wherein the first outlet (7) is opened and closed by a first valve (12) and the second outlet (8) is opened and closed by a second valve (13).

4. The container system (1) according to claim 1, wherein that valve, which is closing first, also opens after the other valve opens.

5. The container system (1) according to any preceding claim, wherein the first valve (12) comprises a retard spring (17).

6. The container system (1) according to any preceding claim, wherein the first container (2) and the second container (3) have the same height and the ratio between the area of first outlet (7) and the area of the second outlet (8) is equal to the ratio between the volume of the first container (2) and the volume of the second container (3).

7. The container system (1) according to any preceding claim, wherein the ratio between the area of the first outlet (7) and the area of the second outlet (8) is adjusted in case the viscosity of the flowable products (4, 5) stored in the first and second container (2, 3) differs.

8. The container system (1) according to any preceding claim, wherein the cross-section of the first and second container (2, 3) is constant over their height.

9. The container system (1) according to any preceding claim, wherein the first valve (12) and the second valve (13) are arranged in line.

10. The container system (1) according to any preceding claim, wherein the first valve (12) and the second valve (13) are operated simultaneously by at least one actuation rod.

11. The container system (1) according to any one of claims 1, 2, 4 to 10,
wherein the second valve (13) opens and closes the third outlet (9) of the mixing/discharging volume (6).

12. The container system (1) according to any one of claims 1 to 8, wherein the first container (2) and/or the second container (3) consist of more than one tank, wherein the tanks of the first container (2) are connected by a first connection pipe (14) and /or the tanks of the second container (3) are connected by a second connection pipe (15); wherein the first valve (12) opens and closes the first connection pipe (14) and second valve (13) opens and closes the second connection pipe (15).

13. The container system (1) according to any claim 11, wherein the first container (2) is located inside the second container (3) and the second outlet (8) of the second container (3) provides a fluid communication between the second container (3) and the mixing/discharging volume (6).

14. The container system (1) according to any claim 11, wherein the first container (2) is located inside the second container (3) and the second outlet (8) of the second container (3) provides a fluid communication between the second container (3) and the mixing/discharging volume (6) and wherein the first valve (12) closes before the second valve (13) closes.

15. The container system (1) according to any claim 11, wherein the first container (2) is located inside the second container (3) and the second outlet (8) of the second container (3) provides a fluid communication between the second container (3) and the mixing/discharging volume (6) and wherein the first valve (12) closes before the second valve (13) closes, and wherein the second valve (13) is caused to open before the first valve (12) opens.

## Patentansprüche

1. Ein Behältersystem (1) zum Abgeben fließfähiger Produkte enthaltend mindestens einen ersten Behälter (2) enthaltend ein erstes fließfähiges Produkt (4), einen zweiten Behälter (3) enthaltend ein zweites fließfähiges Produkt (5) und ein Misch-/Abgabevolumen (6), wobei sich das erste und das zweite fließfähige Produkt (4, 5) während des Abgabevorgangs mischen,
wobei der erste Behälter (2) einen ersten Auslass (7) aufweist, der mit dem Misch-/Abgabevolumen (6) verbunden ist;
wobei der zweite Behälter (3) einen zweiten Auslass (8) aufweist, der mit dem Misch-/Abgabevolumen (6) verbunden ist;
wobei das Misch-/Abgabevolumen (6) einen dritten Auslass (9) aufweist, um ein gemischtes fließfähiges Produkt abzugeben;
wobei die Abgabe des ersten fließfähigen Produktes (4) aus dem ersten Behälter (2) durch ein erstes Ventil (12) gesteuert wird und die Abgabe des zweiten fließfähigen Produktes (5) aus dem zweiten Behälter (3) durch ein zweites Ventil (13) gesteuert wird,
**dadurch gekennzeichnet, dass**
das erste Ventil (12) und das zweite Ventil (13) Flachventile sind und wobei das erste Ventil (12) und das zweite Ventil (13) gleichzeitig arbeiten;
wobei eines der Ventile (12 oder 13) zuerst schließt.

2. Das Behältersystem (1) gemäß Anspruch 1, wobei der erste Auslass (7) und der zweite Auslass (8) getrennt voneinander angeordnet sind.

3. Das Behältersystem (1) gemäß Anspruch 1 oder 2, wobei der erste Auslass (7) durch ein erstes Ventil (12) geöffnet und geschlossen wird und der zweite Auslass (8) durch ein zweites Ventil (13) geöffnet und geschlossen wird.

4. Das Behältersystem (1) gemäß Anspruch 1, wobei das Ventil, das zuerst schließt, sich öffnet nachdem sich das andere Ventil geöffnet hat.

5. Das Behältersystem (1) gemäß irgendeinem der vorhergehenden Ansprüche, wobei das erste Ventil (12) eine Verzögerungsfeder (17) aufweist.

6. Das Behältersystem (1) gemäß irgendeinem der vorhergehenden Ansprüche, wobei der erste Behälter (2) und der zweite Behälter (3) die gleiche Höhe aufweisen und das Verhältnis zwischen der Querschnittsfläche des ersten Auslasses (7) und der Querschnittsfläche des zweiten Auslasses (8) gleich dem Verhältnis zwischen dem Volumen des ersten Behälters (2) und dem Volumen des zweiten Behälters (3) ist.

7. Das Behältersystem (1) gemäß irgendeinem der vorhergehenden Ansprüche, wobei das Verhältnis zwischen der Querschnittsfläche des ersten Auslasses (7) und der Querschnittsfläche des zweiten Auslasses (8) angepasst wird, wenn die Viskosität der fließfähigen Produkte (4, 5), die in dem ersten und zweiten Behälter aufbewahrt (2, 3) werden, unterschiedlich ist.

8. Das Behältersystem (1) gemäß irgendeinem der vorhergehenden Ansprüche, wobei der Querschnitt des ersten und des zweiten Behälters (2, 3) über ihre Höhe konstant sind.

9. Das Behältersystem (1) gemäß irgendeinem der vorhergehenden Ansprüche, wobei das erste Ventil (12) und das zweite Ventil (13) in Reihe angeordnet sind.

10. Behältersystem (1) gemäß irgendeinem der vorhergehenden Ansprüche, wobei das erste Ventil (12) und das zweite Ventil (13) gleichzeitig durch mindestens eine Betätigungsstange betätigt werden.

11. Das Behältersystem (1) gemäß irgendeinem der Ansprüche 1, 2, 4 bis 10, wobei das zweite Ventil (13) den dritten Auslass (9) des Misch-/Abgabevolumens (6) öffnet und schließt.

12. Das Behältersystem (1) gemäß irgendeinem der Ansprüche 1 bis 8, wobei der erste Behälter (2) und/oder der zweite Behälter (3) aus mehr als einem Tank bestehen, wobei die Tanks des ersten Behälters (2) durch eine erste Verbindungsleitung (14) miteinander verbunden sind und/oder die Tanks des zweiten Behälters (3) durch eine zweite Verbindungsleitung (15) miteinander verbunden sind; wobei das erste Ventil (12) die erste Verbindungsleitung (14) öffnet und schließt und das zweite Ventil (13) die zweite Verbindungsleitung (15) öffnet und schließt.

13. Das Behältersystem (1) gemäß Anspruch 11, wobei der erste Behälter (2) innerhalb des zweiten Behälters (3) angeordnet ist (3) und der zweite Auslass (8) des zweiten Behälters (3) eine fluide Kommunikation zwischen dem zweiten Behälter (3) und dem Misch-/Abgabevolumen (6) bereitstellt.

14. Das Behältersystem (1) gemäß Anspruch 11, wobei der erste Behälter (2) innerhalb des zweiten Behälters angeordnet ist (3) und der zweite Auslass (8) des zweiten Behälters (3) eine fluide Kommunikation zwischen dem zweiten Behälter (3) und dem Misch-/Abgabevolumen (6) bereitstellt, und wobei das erste Ventil (12) schließt, bevor das zweite Ventil (13) schließt.

15. Das Behältersystem (1) gemäß Anspruch 11, wobei der erste Behälter (2) innerhalb des zweiten Behälters angeordnet ist (3) und der zweite Auslass (8) des zweiten Behälters (3) eine fluide Kommunikation zwischen dem zweiten Behälter (3) und dem Misch-/Abgabevolumen (6) bereitstellt, und wobei das erste Ventil (12) schließt bevor das zweite Ventil (13) schließt, und wobei das zweite Ventil (13) veranlasst wird sich zu öffnen bevor sich das erste Ventil (12) öffnet.

## Revendications

1. Système de contenant (1) destiné à décharger des produits fluides comprenant au moins un premier contenant (2) contenant un premier produit fluide (4), un second contenant (3) contenant un second produit fluide (5) et un volume de mélange/décharge (6) où les premier et second produits fluides (4, 5) se mélangent durant le processus de décharge,
dans lequel le premier contenant (2) a un premier orifice de sortie (7) lié au volume de mélange/décharge (6) ;
dans lequel le second contenant (3) a un deuxième orifice de sortie (8) lié au volume de mélange/décharge (6) ;
dans lequel le volume de mélange/décharge (6) a un troisième orifice de sortie (9) pour décharger un produit fluide mélangé ; dans lequel la décharge du premier produit fluide (4) du premier contenant (2) est régulée par un premier clapet (12) et la décharge du second produit fluide (5) du second contenant (3) est régulée par un second clapet (13),
**caractérisé en ce que**
le premier clapet (12) et le second clapet (13) sont des clapets plats et dans lequel le premier clapet (12) et le second clapet (13) fonctionnent simultanément ;
dans lequel l'un des clapets (12 ou 13) se ferme en premier.

2. Système de contenant (1) selon la revendication 1, dans lequel le premier orifice de sortie (7) et le deuxième orifice de sortie (8) se situent séparément.

3. Système de contenant (1) selon la revendication 1 ou 2, dans lequel le premier orifice de sortie (7) est ouvert et fermé par un premier clapet (12) et le deuxième orifice de sortie (8) est ouvert et fermé par un second clapet (13).

4. Système de contenant (1) selon la revendication 1, dans lequel ce clapet, qui se ferme en premier, s'ouvre également après l'ouverture de l'autre clapet.

5. Système de contenant (1) selon l'une quelconque des revendications précédentes, dans lequel le premier clapet (12) comprend un ressort à retard (17).

6. Système de contenant (1) selon l'une quelconque des revendications précédentes, dans lequel le premier contenant (2) et le second contenant (3) ont la même hauteur et le rapport entre la superficie du premier orifice de sortie (7) et la superficie du deuxième orifice de sortie (8) est égal au rapport entre le volume du premier contenant (2) et le volume du second contenant (3).

7. Système de contenant (1) selon l'une quelconque des revendications précédentes, dans lequel le rapport entre la superficie du premier orifice de sortie (7) et la superficie du deuxième orifice de sortie (8) est ajusté dans le cas où la viscosité des produits fluides (4, 5) stockés dans les premier et second contenants (2, 3) diffère.

8. Système de contenant (1) selon l'une quelconque des revendications précédentes, dans lequel la section transversale des premier et second contenants (2, 3) est constante sur leur hauteur.

9. Système de contenant (1) selon l'une quelconque des revendications précédentes, dans lequel le premier clapet (12) et le second clapet (13) sont agencés en ligne.

10. Système de contenant (1) selon l'une quelconque des revendications précédentes, dans lequel le premier clapet (12) et le second clapet (13) sont actionnés simultanément par au moins une tige d'actionnement.

11. Système de contenant (1) selon l'une quelconque des revendications 1, 2, 4 à 10, dans lequel le second clapet (13) ouvre et ferme le troisième orifice de sortie (9) du volume de mélange/décharge (6).

12. Système de contenant (1) selon l'une quelconque des revendications 1 à 8, dans lequel le premier contenant (2) et/ou le second contenant (3) sont constitués de plus d'un réservoir, dans lequel les réservoirs du premier contenant (2) sont reliés par un premier tuyau de liaison (14) et/ou les réservoirs du second contenant (3) sont reliés par un second tuyau de liaison (15) ; dans lequel le premier clapet (12) ouvre et ferme le premier tuyau de liaison (14) et le second clapet (13) ouvre et ferme le second tuyau de liaison (15).

13. Système de contenant (1) selon la revendication 11, dans lequel le premier contenant (2) se situe à l'intérieur du second contenant (3) et le deuxième orifice de sortie (8) du second contenant (3) permet une communication fluidique entre le second contenant (3) et le volume de mélange/décharge (6).

14. Système de contenant (1) selon la revendication 11, dans lequel le premier contenant (2) se situe à l'intérieur du second contenant (3) et le deuxième orifice de sortie (8) du second contenant (3) permet une communication fluidique entre le second contenant (3) et le volume de mélange/décharge (6) et dans lequel le premier clapet (12) se ferme avant la fermeture du second clapet (13).

15. Système de contenant (1) selon la revendication 11, dans lequel le premier contenant (2) se situe à l'intérieur du second contenant (3) et le deuxième orifice de sortie (8) du second contenant (3) permet une communication fluidique entre le second contenant (3) et le volume de mélange/décharge (6) et dans lequel le premier clapet (12) se ferme avant la fermeture du second clapet (13), et dans lequel le second clapet (13) est amené à s'ouvrir avant l'ouverture du premier clapet (12).
